(19) Europäisches Patentamt / European Patent Office / Office européen des brevets

(11) **EP 1 965 548 B1**

(12) **FASCICULE DE BREVET EUROPEEN**

(45) Date de publication et mention
de la délivrance du brevet:
**02.09.2009   Bulletin 2009/36**

(51) Int Cl.:
*H04L 25/03* *(2006.01)*    *H04L 25/49* *(2006.01)*

(21) Numéro de dépôt: **08151938.1**

(22) Date de dépôt: **26.02.2008**

(54) **Décodeur à maximum de vraisemblance pour système multi-source à modulation de position d'impulsion**

Maximum-Likelihood-Dekoder für System mit mehreren Quellen zur Modulation der Impulsposition

Maximum likelihood decoder for a multi-source system with pulse position modulation

(84) Etats contractants désignés:
**DE ES FI GB SE**

(30) Priorité:  **27.02.2007   FR 0753531**

(43) Date de publication de la demande:
**03.09.2008   Bulletin 2008/36**

(73) Titulaire: **COMMISSARIAT A L'ENERGIE ATOMIQUE**
**75015 Paris (FR)**

(72) Inventeur: **Abou Rjeily, Chadi**
**Lebanese American University**
**Faculty of Engineering & Architecture**
**Byblos (LB)**

(74) Mandataire: **Augarde, Eric**
**Brevalex**
**56 Boulevard de l'Embouchure,**
**Bât. B**
**B.P. 27519**
**31075 Toulouse Cedex 2 (FR)**

(56) Documents cités:
- **ABOU-RJEILY C ET AL: "MIMO UWB Communications using Modified Hermite Pulses" IEEE INTERNATIONAL SYMPOSIUM ON PERSONAL, INDOOR AND MOBILE RADIO COMMUNICATIONS. PIMRC, XX, XX, 2006, pages 1-5, XP002456994**
- **CAIRE G ET AL: "On maximum-likelihood detection and the search for the closest lattice point" IEEE TRANSACTIONS ON INFORMATION THEORY, IEEE SERVICE CENTER, PISCATAWAY, NJ, US, vol. 49, no. 10, octobre 2003 (2003-10), pages 2389-2402, XP011102229 ISSN: 0018-9448**

**Description**

## DOMAINE TECHNIQUE

La présente invention concerne le domaine du décodage à maximum de vraisemblance, plus particulièrement pour un système multi-source utilisant une modulation de position d'impulsion.

## ÉTAT DE LA TECHNIQUE ANTÉRIEURE

Les récepteurs utilisant un critère de maximum de vraisemblance, dénommés aussi récepteurs ML (*Maximum Likelihood*) sont bien connus dans le domaine des télécommunications pour être optimaux lorsque le canal de transmission est gaussien. On trouvera par exemple une description de ces récepteurs dans l'ouvrage de J.G. Proakis intitulé « Digital communications », 4ième édition, pages 242-247. Les récepteurs à maximum de vraisemblance ont été notamment envisagés dans le domaine des télécommunications mobiles. Afin d'éliminer l'interférence multi-accès ou MAI (*Multi Access Interference*), on peut recourir à un récepteur ML capable de décoder simultanément les symboles émis par les différents utilisateurs sur le canal de transmission (récepteur ML multi-utilisateur). On peut montrer que l'estimation des symboles transmis par ces utilisateurs selon le critère du maximum de vraisemblance revient à rechercher parmi les points d'un réseau celui qui est le plus proche d'un point représentatif du signal reçu dans un espace de dimension $M^K$ où $M$ est la dimensionnalité de la modulation utilisée par les $K$ utilisateurs. Le réseau de points est généré par les constellations de modulation des différents utilisateurs. Cette méthode s'avère rapidement complexe pour $K$ élevé aussi recourt-on classiquement à un décodage dit « par sphère » qui limite la recherche du plus proche voisin aux points du réseau appartenant à une boule de bruit centrée sur le point reçu. On trouvera une description du décodeur par sphère dans l'article d'E. Viterbo et al. intitulé « A universal lattice code decoder for fading channels » publié dans IEEE Transactions on Information Theory, vol. 45, pages 1639-1642, Juillet 1999. Le décodage par sphère a été appliqué à des systèmes utilisant des constellations de modulation de type PAM ou QAM.

Plus récemment, le décodage par sphère a été proposé pour la réalisation de récepteurs de systèmes MIMO (*Multiple Input Multiple Output*). On entend par système MIMO un système de télécommunication dans lequel au moins un émetteur transmet des symboles d'information au moyen d'une pluralité d'antennes. Le récepteur peut posséder une seule antenne (on parle alors plus particulièrement de système MISO, acronyme de *Multiple Input Single* Output) ou une pluralité d'antennes, le terme MIMO étant choisi ici pour désigner indifféremment ces deux configurations.

Dans le cas d'un système MIMO, le réseau de points est généré par les constellations de modulation utilisées pour transmettre les symboles par les différentes antennes. On trouvera un exemple de réalisation de décodage par sphère pour système MIMO dans l'article de M.O. Damen et al. intitulé « On Maximum-Likelihood detection and the search for the closest lattice point » publié dans IEEE Trans. on Information Theory, Vol. 49, N° 10, Oct. 2003, pages 2389-2402. Dans ce décodeur par sphère, seules des modulations PAM et QAM sont envisagées.

Dans la suite nous désignerons par le terme générique multi-source aussi bien une configuration multi-utilisateur qu'une configuration MIMO. On comprendra que dans le premier cas les sources représentent les flux de symboles des ou à destination des différents utilisateurs et, dans le second cas, les flux de symboles émis par les différentes antennes. Bien entendu ces deux cas peuvent être combinés lorsque les terminaux des utilisateurs sont de type multi-antenne. Nous supposerons par ailleurs que les flux de symboles sont synchrones.

Le récepteur ML à décodage par sphère sera décrit dans le cas de $K$ utilisateurs, chaque utilisateur $k \in \{1,..,$

$K\}$ transmettant à l'aide de $i_k$ antennes à destination du récepteur, soit un nombre total de $\quad P = \sum_{k=1}^{K} i_k$

sources. Le signal reçu peut être exprimé sous la forme vectorielle :

$$\mathbf{x} = \mathbf{Ha} + \mathbf{n} \qquad\qquad (1)$$

où :

    $\mathbf{x}$ est un vecteur de variables de décision de dimension $P$' où $P$' est égal au produit du nombre d'antennes du récepteur avec le nombre de variables de décision observées par antenne de réception, par exemple le nombre de trajets résolus par antenne.

    $\mathbf{a}$ est un vecteur de taille $PM$, obtenu par la concaténation de vecteurs $\mathbf{a^{(1)},a^{(2)},..,a^{(P)}}$, chaque vecteur $a^{(p)}$, $p \in \{1,..,$

$P\}$ étant la représentation vectorielle du symbole d'information transmis par la $p^{\text{ième}}$ source et étant de dimension $M$ égale à la dimensionnalité de la modulation utilisée ;

**H** est la matrice de taille $P' \times PPM$ représentant le canal de transmission, elle décrit notamment les interférences entre utilisateurs et entre trajets issus des différentes antennes ;

**n** est un vecteur de dimension $P'$ dont les composantes sont des échantillons de bruit blanc centré additif gaussien affectant le signal reçu.

Le récepteur à maximum de vraisemblance estime le vecteur **â** minimisant l'écart quadratique $\|\mathbf{x}\text{-}\mathbf{Ha}\|^2$ avec le vecteur reçu, soit:

$$\hat{\mathbf{a}} = \arg\min_{\mathbf{a} \in C^P} \|\mathbf{x} - \mathbf{Ha}\|^2 \qquad\qquad (2)$$

où $C^P$ est la constellation produit des constellations respectives des $P$ sources.

On peut montrer que l'expression (2) peut s'écrire de manière équivalente :

$$\hat{\mathbf{a}} = \arg\min_{\mathbf{a} \in C^P} \|\mathbf{z} - \mathbf{Ra}\|^2 \qquad\qquad (3)$$

avec $\mathbf{z} = \mathbf{Q}^{\mathsf{T}}_{\mathbf{x}}$ et

où **Q** et **R** sont respectivement une matrice unitaire de taille $P' \times P$ et une matrice triangulaire supérieure de taille $P \times P$ obtenue par décomposition QR de la matrice **H**, c'est-à-dire $\mathbf{R}^{\mathsf{T}}\mathbf{R} = \mathbf{H}^{\mathsf{T}}\mathbf{H}$.

Pour des constellations PAM ou QAM, il est toujours possible, au moyen d'une opération linéaire élémentaire $\ell$, dont nous ferons par la suite abstraction, de se ramener au cas où les points de la constellation produit sont de éléments de $Z^{MP}$ où $Z$ est l'ensemble des entiers relatifs et $M$ la dimensionnalité des constellations de modulation . Les vecteurs **Ra** peuvent alors être représentés comme les points d'un réseau $\Lambda$ de matrice génératrice **R**.

Le décodage par sphère consiste à faire une recherche de plus proche voisin au sein d'une boule (dans un espace de dimension $MP$) centrée sur le point représentatif du signal reçu **z**. La recherche est effectuée parmi les points de $\Lambda$ compris au sein de cette boule.

La manière dont les candidats sont successivement sélectionnés (ou énumérés) est critique pour les performances de l'algorithme de décodage. On connaît essentiellement deux techniques d'énumération, la première dite de Pohst, la seconde dite de Schnorr-Euchner.

Nous décrirons tout d'abord un décodage par sphère utilisant une énumération de Pohst.

On supposera pour les besoins d'illustration que la modulation est de type PAM, c'est-à-dire que l'espace considéré est de dimension $P$. Il s'applique également à une modulation QAM, la dimension de l'espace étant alors $2P$.

La recherche est effectuée, dimension par dimension, ou selon la terminologie usuelle, couche par couche, en sélectionnant dans chaque couche la coordonnée d'un point candidat de $\Lambda$.

La contribution de la couche $P$ à la distance quadratique (3) vaut simplement :

$$\left(z_P - r_{P,P}a_P\right)^2 \qquad\qquad (4)$$

De même la contribution de la couche $P$-1 à cette distance quadratique s'écrit :

$$\left(z_P - r_{P-1,P-1}a_{P-1} - r_{P-1,P}a_P\right)^2 \qquad\qquad (5)$$

et, de manière générale, la contribution de la couche $i$ s'exprime par:

$$\left(z_i - r_{i,i}a_i - E_i\right)^2 \qquad\qquad (6)$$

avec $E_i$ défini par $E_i = \sum_{j=i+1}^{P} r_{i,j}a_j$ .

Si l'on désigne par $T_i$, la contribution des couches successives $i+1,...,P,$ celle-ci peut être obtenue par récurrence descendante :

$$T_{i-1} = T_i + \left|z_i - E_i - r_{i,i}a_i\right|^2 \qquad\qquad (7)$$

avec $T_p$=0.

Avec les conventions précédentes la recherche dans la sphère de rayon quadratique $d$ revient à déterminer pour chacune des couches les valeurs $a_i$ de $Z$ vérifiant:

$$\left(z_i - r_{i,i}a_i - E_i\right)^2 + T_i \le d \qquad \text{pour } i = P,..,1 \qquad (8)$$

ou, de manière équivalente :

$$\frac{z_i - E_i - \sqrt{d - T_i}}{r_{i,i}} \le a_i \le \frac{z_i - E_i + \sqrt{d - T_i}}{r_{i,i}} \qquad\qquad (9)$$

Finalement, si la constellation PAM est d'ordre $M'$ où $M'$ est une puissance de 2 et si la transformation linéaire précitée est $\ell(m')=2m'-1-M'$ pour $m' \in \{1,..,M'\}$, la recherche peut être réduite aux entiers impairs appartenant à l'intervalle $[A_i, B_i]$ où :

$$A_i = \max\left(1 - M', \left\lceil \frac{z_i - E_i - \sqrt{d - T_i}}{r_{i,i}} \right\rceil \right)$$

et

$$B_i = \min\left(M' - 1, \left\lfloor \frac{z_i - E_i + \sqrt{d - T_i}}{r_{i,i}} \right\rfloor \right) \qquad\qquad (10)$$

où $\lceil x \rceil$ est le plus petit entier supérieur à $x$ et $\lfloor x \rfloor$ est le plus grand entier inférieur à $x$.

Cette réduction de l'intervalle de recherche correspond en fait à une intersection de l'intervalle tel que défini en (9), avec la projection de la constellation sur la dimension en question.

Un intervalle de validité est ainsi défini pour chaque couche. Il donne l'excursion maximale admissible dans cette couche, compte tenu du choix déjà fait pour les valeurs $a_i$ dans les couches supérieures.

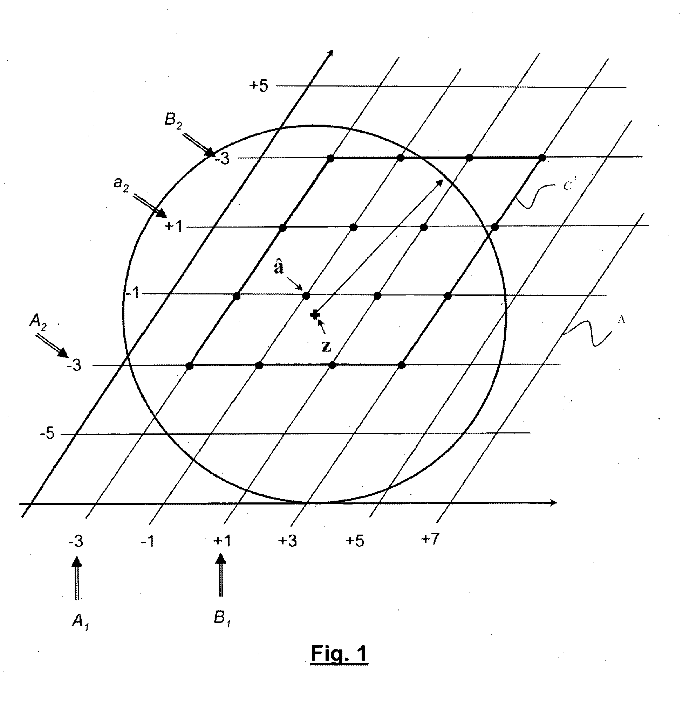

La Fig. 1 représente le principe du décodeur par sphère dans le cas simple où $P\mathbf{=2}$ et $M'\mathbf{=4}$. La sphère est centrée sur le point **z** représenté par une croix. Les points de la constellation produit $C^2$ sont représentés par des cercles pleins. L'intervalle de validité $[A_2,B_2]$ de la couche 2 n'est autre que l'intersection de la projection de la sphère avec celle de la constellation, ici $[A_2,B_2]=[-3,3]$. L' intervalle de validité $[A_1,B_1]$ est ensuite déterminé par le choix d'une valeur $a_2$ dans $[A_2,B_2]$. On voit ainsi dans l'exemple illustré que pour $a_2=1$, l'intervalle de validité est $[A_1, B_1]= [-3,1]$ .

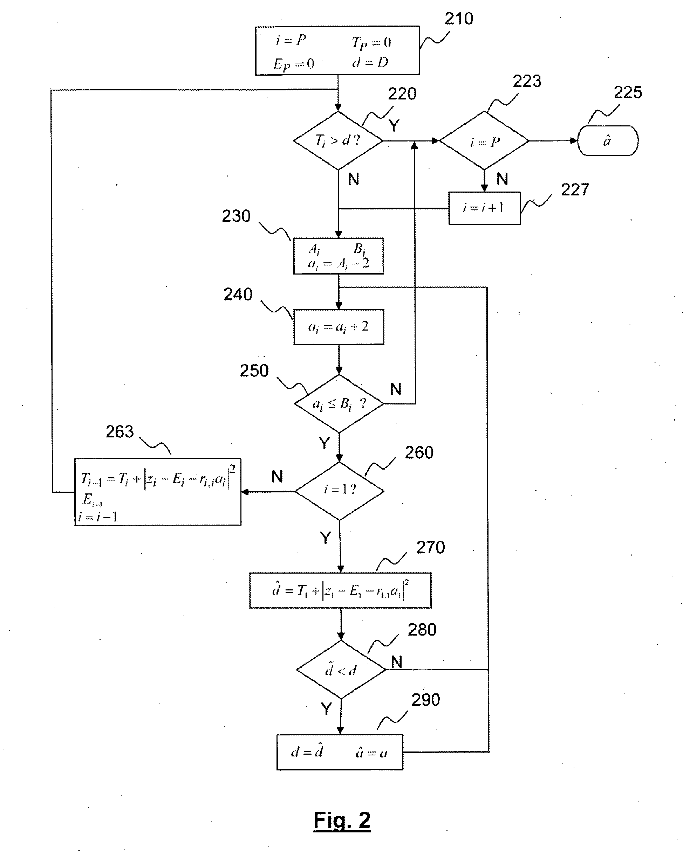

La Fig. 2 représente un organigramme de la méthode de décodage par sphère utilisant une énumération de Pohst.

A l'étape 210, on procède à l'initialisation de l'indice de couche, des variables intermédiaires et du rayon de recherche de la sphère, soit : $i=P$ ; $T_P=0$ ; $E_P = 0$ ; $d=D$ où $D$ est le rayon quadratique initial de la sphère de recherche. $D$ est choisi en fonction d'une estimation de la puissance de bruit.

A l'étape 220, on teste si $T_i>d$, c'est-à-dire si l'intervalle se réduit à l'ensemble vide. Si c'est le cas, on teste en 223 si $i=P$ et dans l'affirmative l'algorithme se termine en 225. Dans la négative, on incrémente $i$ de 1 et l'on passe à l'étape 230.

Si $T_i \leq d$, on calcule en 230 les bornes $A_i$ et $B_i$ selon (10) et on initialise $a_i$ par $a_i=A_i-2$.

A l'étape 240 on incrémente $a_i$ de 2 et on teste en 250 si le point correspondant est toujours dans l'intervalle, soit $a_i \leq B_i$ . Dans la négative, on retourne au test 223 et dans l'affirmative on teste en 260 si $i = 1$. Si ce n'est pas le cas, on passe à l'étape 263 dans laquelle $i$ est décrémenté de 1 et les nouvelles valeurs $E_{i-1}$ et $T_{i-1}$ sont calculées. En revanche, si l'on a atteint la couche la plus basse, $i=1$, on ajoute en 270 la contribution de cette dernière couche pour obtenir la distance du candidat sélectionné au point **z**, soit $\hat{d} = T_1| + z_1 - E_1 - r_{1,1}a_1|^2$. On compare en 280 cette distance au rayon quadratique courant $d$. Si elle est inférieure, on réduit le rayon de la sphère en conséquence $d = \hat{d}$ et on met à jour le meilleur candidat $\hat{a} = a$. Dans tous les cas on retourne ensuite à l'étape 240.

L'algorithme exposé ci-dessus effectue une recherche en balayant les intervalles de validité couche par couche à partir de leurs bornes inférieures vers leurs bornes supérieures, le balayage le plus rapide étant effectué dans la couche la plus haute ($i=P$) et le plus lent dans la couche la plus basse ($i=1$). A chaque sélection d'une nouvelle coordonnée de candidat dans une couche, les bornes des intervalles de validité des couches supérieures sont recalculées. Par ailleurs, dès que l'on améliore la distance au point reçu, on met à jour le rayon de la sphère, ce qui permet d'accélérer la recherche. Enfin, le vecteur de sortie de l'algorithme est le point de la constellation produit le plus proche du point reçu **z**.

Le décodage par sphère utilisant l'énumération de Pohst est assez lent du fait du balayage systématique des intervalles de validité à partir de leurs bornes inférieures.

Le décodage par sphère utilisant l'énumération de Schnorr-Euchner est sensiblement plus rapide que le précédent. Il part du principe qu'il est plus efficace de faire une recherche en partant d'un point $\hat{\mathbf{e}}$ de la constellation produit correspondant à une première estimation du signal transmis. Plus précisément, ce point est obtenu au moyen d'une égalisation de type ZF-DFE: on soustrait l'interférence due à une couche (un utilisateur) aux couches (inférieures) suivantes, la décision à chaque couche étant prise par le décodeur par sphère.

Soit, en commençant par la couche $P$ :

$$\hat{e}_i = round(e_i)$$

avec

$$e_P = z_P / r_{P,P}$$

$$e_i = (z_i - \xi_i)/r_{ii} \quad \text{et} \quad \xi_i = \sum_{j=i+1}^{P} r_{i,j}\hat{e}_j \quad \text{pour} \quad i = P-1,...,1 \qquad (11)$$

où $round(y)$ représente l'entier relatif impair (avec la forme précédente de transformation linéaire $\ell$) le plus proche de $y$.

Chaque couche $i$ contribue à la distance quadratique du point **a** du réseau au point **z** reçu pour $d_i = r_{ii}(a_i - e_i)^2$.

La recherche du plus proche voisin s'effectue dans chaque couche $i$ en considérant successivement les coordonnées $\hat{e}_i$, $\hat{e}_i +2\delta_i$, $\hat{e}_i -2\delta_i$, $\hat{e}_i+4\delta_i$, $\hat{e}_i -4\delta_i$, etc. où $\delta_i=\text{sgn}(e_i-\hat{e}_i)$. On comprendra que l'on part ainsi de $\hat{e}_i$ et que l'on progresse en zigzag de part et d'autre de cette estimation tout en s'assurant de rester dans l'intervalle de validité.

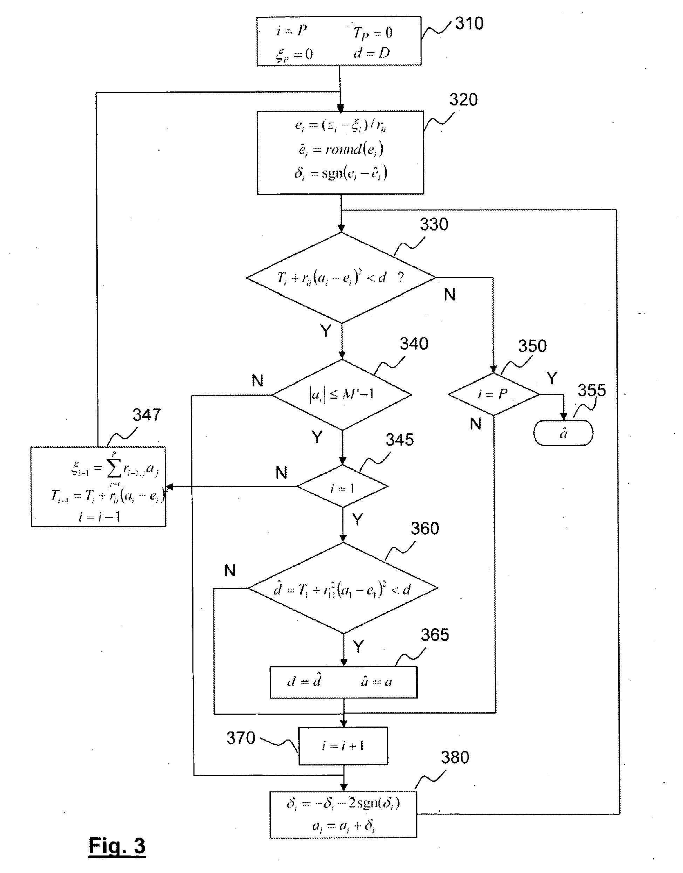

La Fig. 3 représente un organigramme de la méthode de décodage par sphère utilisant une énumération de Schnorr-Euchner.

A l'étape 310, on initialise l'indice de couche, les variables intermédiaires et le rayon de recherche de la sphère, soit : $i=P$; $\xi_P=0$ ; $T_P=0$ ; $d=D$ où $D$ est le rayon quadratique initial de la sphère de recherche.

A l'étape 320, on procède à l'égalisation ZF-DFE : $\hat{e}_i=round(e_i)$ avec $e_i=(z_i-\xi_i)/r_{ii}$, et l'on détermine la valeur de coordonnée initiale $a_i=\hat{e}_i$ ainsi que la direction de recherche initiale: $\delta_i=sgn(e_i-\hat{e}_i)$.

A l'étape 330, on teste si le point est dans la sphère, c'est-à-dire si $T_i+r_{ii}(a_i-e_i)^2< d$. Dans la négative on passe à l'étape 350. Dans l'affirmative, on vérifie en 340 qu'il est bien dans la constellation c'est-à-dire que $|a_i| \leq M'$-1. Si ce n'est pas le cas on passe à l'étape 380.

Si le candidat $a_i$ est dans l'intervalle de validité (projection de l'intersection de la sphère et de la constellation), on teste en 345 si l'on a atteint la couche la plus basse, $i=1$. Si c'est le cas, on poursuit en 360.

A défaut, on met à jour en 347 les variables intermédiaires :

$$\xi_{i-1}=\sum_{j=i}^{P}r_{i-1,j}a_j \qquad , \; T_{i-1}=T_i+r_{ii}(a_i-e_i)^2$$

et on décrémente $i$ de 1. On retourne ensuite à l'étape 320.

On teste en 350 si $i=P$. Si c'est le cas, l'algorithme se termine en 355, sinon, on passe à l'étape 370 pour incrémenter $i$ de 1.

A l'étape 345, si $i=1$, on a atteint la couche la plus basse et donc un point candidat a été trouvé. On ajoute la contribution de cette couche pour obtenir la distance du candidat sélectionné au point **z**, soit $\hat{d}=T_1+r_{11}^2(a_1-e_1)^2$ .

On compare en 360 cette distance au rayon quadratique courant $d$. Si elle est inférieure à $d$, on met à jour la distance $d=\hat{d}$ et le plus proche voisin $\hat{a}=a$ en 365. Dans tous les cas on passe par 370 pour incrémenter $i$ de 1.

Enfin, à l'étape 380, on met à jour $a_i$ par $a_i=a_i+\delta_i$ avec $\delta_i=-\delta_i$ -2sgn$(\delta_i)$ et l'on retourne à l'étape 330.

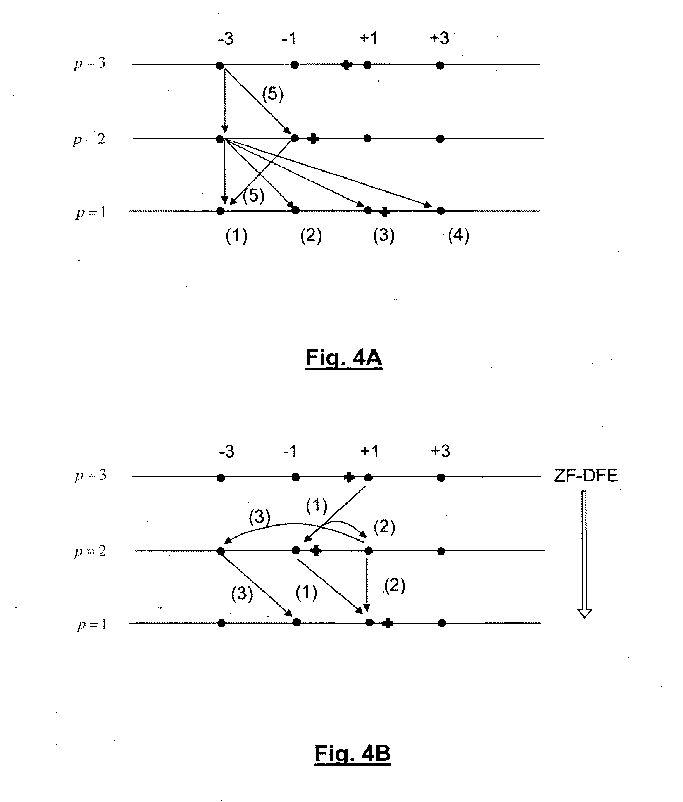

On a représenté schématiquement, en Fig. 4A et 4B, le balayage des points selon l'énumération de Pohst et celle de Schnorr-Euchner, respectivement. On a supposé que la constellation était 4-PAM et que le nombre de sources $P$ était de 3. Les différentes lignes correspondent aux projections selon les $P=3$ dimensions. On a représenté par des croix les composantes de **z** et par des cercles les points des constellations de modulation PAM. Dans les deux cas, les branches successivement parcourues par l'algorithme ont été indiquées par (1), (2) etc.

Alors que le décodage par sphère a fait l'objet de nombreuses études pour les modulations PAM et QAM, il n'a été envisagé que récemment pour les modulations PPM (*Pulse Position Modulation*). Un décodage par sphère pour ce type de modulation a été proposé pour un système MIMO UWB de type impulsionnel dans l'article de C. Abou-Rjeily et al. intitulé « MIMO UWB communications using modified Hermite pulses », publié dans Proc. of the 17th Annual IEEE Internal Symposium on Personal, Indoor and Mobile Communications (PIRMC' 06). On rappelle qu'un système UWB impulsionnel est un système utilisant la transmission en bande de base de trames d'impulsions très brèves (de l'ordre de quelques picosecondes). Les symboles transmis appartiennent à un alphabet de modulation $M$-PPM, ou de manière plus générale à une modulation hybride $M$ -PPM-$M'$-PAM. Le cardinal de l'alphabet de modulation est $MM'$. Pour chacune des $M$ positions temporelles, $M'$ amplitudes de modulation sont possibles. Un symbole $a$ de cet alphabet peut être représenté par une séquence $a_m$, $m=0,..,M$-1 avec $a_m=\delta(m-\mu)\alpha$ où $\mu$ est une position de la modulation $M$ - PPM, $\alpha$ une amplitude de la modulation PAM et $\delta(.)$ la distribution de Dirac. Chaque symbole PPM ou PPM-PAM module les positions temporelles et, le cas échéant, les positions temporelles et les amplitudes des impulsions élémentaires d'une trame.

On peut considérer un symbole $M$ -PPM (resp. $M$ - PPM- $M'$-PAM) comme un vecteur de dimension $M$, dont une seule des composantes est égale à 1 (resp. $\alpha$) et les autres sont nulles. A la différence d'une modulation QAM, les composantes d'un symbole PPM ou PPM-PAM ne sont donc pas indépendantes.

Si l'on suppose que $P$ sources transmettent des symboles PPM, l'espace des signaux à considérer est de dimension $MP$. Dans cet espace, chaque source est représentée par une couche, elle-même composée de $M$ positions temporelles (ou sous-couches) d'un symbole PPM ou PPM-PAM.

Le décodage par sphère décrit dans l'article précité propose de traiter de manière conjointe $M$ couches consécutives en raison de leur interdépendance.

La relation (8) est alors remplacée par une contrainte liant $M$ sous-couches successives, soit pour la couche d'ordre $p$ :

$$\sum_{m=1}^{M}\left|z_m^{(p)}-\sum_{j=f(p,m)}^{PM}r_{f(p,m),j}a_j\right|^2 \leq d-T_p \qquad (12)$$

où :

$\mathbf{z^{(p)}}$ est un sous vecteur de $\mathbf{z}$, représentatif du signal reçu, autrement dit le vecteur $\mathbf{z}$ est formé par concaténation de $P$ vecteurs $\mathbf{z}^{(1)}$,.., $\mathbf{z}^{(P)}$ correspondant chacun à une source, $z_m^{(p)}$ étant la $m^{\text{ième}}$ composante du symbole PPM ou PPM-PAM émis par cette source ;

la fonction $f$ est donnée par $f(p,m)=(p-1)M + m$ ;

$T_p$ est la somme des contributions à la distance quadratique des couches $p+1,...,P$.

Etant donné que, pour chaque source $p$, la transmission n'a lieu que pour une seule position $c(p) \in \{1,..,M\}$, l'expression (12) peut être réécrite sous la forme :

$$\sum_{m=1}^{M}\left|z_m^{(p)} - r_{f(p,m),f(p,c(p))}a_{f(p,c(p))} - E'_{p,m}\right|^2 \leq d - T_p \qquad (13)$$

avec $E'_{p,m} = \sum_{j=f(p+1,1)}^{PM} r_{f(p,m),j}a_j$ ,

ou bien encore sous la forme plus compacte:

$$\left\|\mathbf{z}^{(p)} - a_{c(p)}^{(p)}\mathbf{R}_{.,\mathbf{c(p)}}^{(\mathbf{p,p})} - \mathbf{E}_{.,\mathbf{p}}\right\|^2 \leq d - T_p \qquad (14)$$

où

le vecteur $\mathbf{a}$, comme le vecteur $\mathbf{z}$, est une concaténation de $P$ vecteurs $\mathbf{a^{(1)}},\mathbf{a^{(2)}},...,\mathbf{a^{(P)}}$, le vecteur $\mathbf{a^{(P)}}$ étant de composantes $a_m^{(p)} = a_{f(p,m)}$ , $m = 1,..,M$ ;

$\mathbf{R}^{(i,j)}$ est une sous-matrice $M \times M$ de $\mathbf{R}$ constituée des éléments $r_{m,m'}$ avec $m=(i-1)M + 1,..,iM$ et $m'=(j-1)M+1,..,jM$ ;

pour une matrice $\Omega$ donnée, $\Omega_{.,\mathbf{k}}$ désigne conventionnellement la $k^{\text{ième}}$ colonne de cette matrice ;

$\mathbf{E}_{.,\mathbf{p}}$ est la $p^{\text{ième}}$ colonne d'une matrice $\mathbf{E}$ et est définie par $\mathbf{E}_{.,\mathbf{p}} = \sum_{p'=p+1,1}^{P} a_{c(p')}^{(p')}\mathbf{R}_{.,\mathbf{c(p')}}^{(\mathbf{p,p'})}$.

On comprendra de l'expression (14) que les $M$ sous-couches correspondant à la source $p$ sont traitées conjointement. En particulier, les bornes des intervalles de validité de chacune des composantes $a_m^{(p)}$ , $m = 1,..,M$ sont déterminées en même temps. Ces bornes dépendent des candidats $\mathbf{a}^{(p+1)},..\mathbf{a}^{(P)}$ déjà choisis pour les couches supérieures.

La technique d'énumération utilisée dans ce décodage par sphère peut être considérée comme une extension d'une énumération de Pohst. Les positions temporelles de chaque couche sont balayées une à une, à partir de leurs bornes inférieures, en prenant la précaution de ne sélectionner qu'une position par couche. La convergence du décodage est donc relativement lente.

D'autre part, l'application directe d'une technique d'énumération de type Schnorr-Euchner est loin d'être triviale puisque les sous-couches, c'est-à-dire les positions PPM d'une même couche ne sont pas indépendantes.

Le but de la présente invention est de proposer un procédé de décodage par sphère pour une pluralité de sources PPM, qui converge plus rapidement que celui connu de l'état de la technique.

## EXPOSÉ DE L'INVENTION

La présente invention est définie par un procédé de décodage par sphère pour récepteur à maximum de vraisemblance destiné à recevoir des symboles PPM d'une pluralité $P$ de sources, chaque source émettant un flux de symboles PPM à $M$ positions de modulation, $P$ symboles PPM émis simultanément par les $P$ sources étant représentés par un point de la constellation de modulation produit dans un espace des signaux transmis de dimension $MP$ décomposé en $P$ couches, chaque couche représentant les $M$ positions de modulation possibles d'un symbole PPM émis par cette source, le signal reçu par ledit récepteur étant transformé en un point représentatif de ce signal, dit point reçu, dans l'espace des signaux transmis, ledit procédé déterminant le point de la constellation produit le plus proche du point reçu à l'intérieur d'une sphère de rayon quadratique donné. Selon ledit procédé, pour chaque couche de rang $p$ :

(a) on effectue une égalisation ZF-DFE du signal reçu dans ladite couche compte tenu des symboles PPM estimés dans les $P$-$p$ couches précédentes, dites couches supérieures à la couche $p$;
(b) on classe dans une liste les $M$ symboles PPM de ladite couche en fonction des contributions qu'ils apporteraient à la distance quadratique au point reçu ;
(c) on sélectionne le symbole PPM réalisant la plus faible contribution et l'on ajoute cette contribution à celles obtenues pour les couches précédentes pour obtenir une somme de contributions ;

les étapes (a),(b),(c) étant répétées jusqu'à ce que l'on atteigne la couche la plus basse ; et
l'on met à jour le rayon quadratique de la sphère et ledit point le plus proche si ladite somme de contributions est inférieure au rayon quadratique de la sphère.

Avantageusement, si pour une couche donnée et un symbole PPM sélectionné dans cette couche, ladite somme des contributions excède le rayon quadratique de la sphère, on passe à la couche supérieure et on sélectionne dans cette couche le symbole suivant de la liste qui lui est associée.

Si tous les symboles de ladite liste associée ont déjà fait l'objet d'une sélection, on passe à la couche encore supérieure pour y sélectionner dans cette dernière le symbole suivant dans la liste qui lui est associée.

Si l'on a atteint la couche la plus haute et que, soit l'on a sélectionné tous les symboles PPM de ladite couche, soit la contribution de ladite couche calculée pour le symbole sélectionné excède le rayon quadratique de la sphère, le procédé de décodage se termine en fournissant ledit point le plus proche.

Selon un exemple de réalisation, les symboles PPM des sources de rangs respectifs $1,..,P$, estimés au sens du maximum de vraisemblance, sont obtenus comme sous-vecteurs ( $\hat{\mathbf{a}}_{\mathbf{opt}}^{(\mathbf{1})}$ , $\hat{\mathbf{a}}_{\mathbf{opt}}^{(\mathbf{2})}$ , .. $\hat{\mathbf{a}}_{\mathbf{opt}}^{(\mathbf{P})}$ )

à $M$ composantes du vecteur à $MP$ composantes représentant ledit point le plus proche $(\hat{\mathbf{a}}_{\mathbf{opt}})$.

La contribution $dp$ d'une couche de rang $p$ , $p \in \{1,..,P\}$ est avantageusement calculée par :

$$d_p = \left\| \mathbf{R}_{\cdot,\mathbf{m}}^{(\mathbf{p},\mathbf{p})} - \mathbf{E}^{(\mathbf{p})} \right\|^2 \quad \text{avec} \quad \mathbf{E}^{(\mathbf{p})} = \mathbf{R}^{(\mathbf{p},\mathbf{p})}\boldsymbol{\eta}^{\mathbf{p}}$$

où
$\mathbf{R}^{(\mathbf{p},\mathbf{p})}$ est la $p^{\text{ième}}$ sous-matrice de taille $M \times M$ sur la diagonale de la matrice triangulaire supérieure $\mathbf{R}$ de taille $MP \times MP$, obtenue par transformation QR d'une matrice $\mathbf{H}$ représentative du canal de transmission entre les $P$ sources et ledit récepteur ;
$\boldsymbol{\eta}^{\mathbf{p}}$ est le résultat de l'égalisation ZF-DFE à la couche $p$ ;

$\mathbf{R}_{\cdot,\mathbf{m}}^{(\mathbf{p},\mathbf{p})}$ est la $m^{\text{ième}}$ colonne de la matrice $\mathbf{R}^{(\mathbf{p},\mathbf{p})}$, où $m \in \{1,..,M\}$ est la position de modulation du symbole PPM sélectionné dans la couche $p$ ; et $\|\Omega\|^2 = \Omega^{\mathbf{T}}\Omega$.

Le classement des positions $m \in \{1,..,M\}$ des symboles PPM de la couche $p$ peut être réalisé en ordonnant ces symboles selon les valeurs :

$$\left\{ -2\left(\mathbf{R}_{\cdot,\mathbf{m}}^{(\mathbf{p},\mathbf{p})}\right)^{\mathbf{T}} \mathbf{E}^{(\mathbf{p})} + \left(\mathbf{R}_{\cdot,\mathbf{m}}^{(\mathbf{p},\mathbf{p})}\right)^{\mathbf{T}} \mathbf{R}_{\cdot,\mathbf{m}}^{(\mathbf{p},\mathbf{p})}; \ m = 1,..,M \right\}$$

Le symbole PPM de la couche $p$ réalisant la plus faible contribution correspond à la position de modulation *pos(p)* obtenue de préférence par :

$$pos(p) = \arg\min_{m} \left( - 2\left(\mathbf{R}_{.,m}^{(p,p)}\right)^{\mathbf{T}} \mathbf{E}^{(p)} + \left(\mathbf{R}_{.,m}^{(p,p)}\right)^{\mathbf{T}} \mathbf{R}_{.,m}^{(p,p)} \right)$$

L'invention est également définie par un récepteur à maximum de vraisemblance destiné à recevoir des symboles PPM d'une pluralité *P* de sources, comprenant un filtre adapté au canal de transmission entre les sources et le récepteur et, le cas échéant, au codage spatio-temporel utilisé à l'émission, ledit récepteur comprenant en outre un décodeur par sphère comprenant des moyens adaptés à exécuter les étapes du procédé de décodage par sphère selon l'une des revendications précédentes, le décodeur par sphère recevant en entrée la sortie dudit filtre adapté.

**BRÈVE DESCRIPTION DES DESSINS**

D'autres caractéristiques et avantages de l'invention apparaîtront à la lecture d'un mode de réalisation préférentiel de l'invention fait en référence aux figures jointes parmi lesquelles :

La Fig. 1 illustre le principe d'un décodage par sphère pour un système à deux sources PAM ;
La Fig. 2 représente l'organigramme d'un premier algorithme de décodage par sphère connu de l'état de la technique ;
La Fig. 3 représente l'organigramme d'un second algorithme de décodage par sphère connu de l'état de la technique ;
Les Figs. 4A et 4B illustrent le balayage de points utilisé respectivement par le premier et le second algorithme de décodage par sphère ;
La Fig. 5 représente l'organigramme d'un algorithme de décodage par sphère selon un mode de réalisation de l'invention ;
La Fig. 6 représente un exemple de progression à travers la constellation produit de l'algorithme de décodage par sphère selon l'invention.

**EXPOSÉ DÉTAILLÉ DE MODES DE RÉALISATION PARTICULIERS**

Nous considérerons ci-après un système comprenant *P* sources de symboles PPM. L'alphabet de modulation comprend *M* positions temporelles. Comme indiqué plus haut les sources de symboles peuvent être des flux de symboles émis par les antennes d'un terminal MIMO, flux de symboles en provenance ou à destination d'une pluralité d'utilisateurs, voire une combinaison de ces deux situations si chaque terminal utilisateur est équipé d'une pluralité d'antennes. Dans

le cas général, $\quad P = \sum_{k=1}^{K} i_k$

où $i_k$ est le nombre d'antennes du terminal de l'utilisateur *k* et *K* le nombre d'utilisateurs. On supposera dans la suite que les flux de symboles sont émis de manière synchrone. Ces flux de symboles modulent avantageusement mais non nécessairement des trames de signaux UWB impulsionnels.

Le récepteur est adapté à calculer *P'M* variables de décision avec *P'>P*. Par exemple, chaque antenne de réception est équipée d'un récepteur Rake adapté à séparer *L* trajets, et pour chaque trajet les *M* positions temporelles de la modulation PPM. Les variables de décision sont alors les *P'M* sorties de ces récepteurs Rake avec *P'=L.P^r* où *P^r* est le nombre d'antennes de réception. Si un codage spatio-temporel est utilisé à l'émission, un filtrage adapté à ce code est utilisé en réception pour séparer les différents utilisateurs et dans ce cas *P'=L.P^r.P.*

Dans tous les cas, le signal reçu par le récepteur peut être représenté par un vecteur **x** de dimension *P'M* correspondant aux *P'M* valeurs des variables de décision. Le vecteur **x** peut s'exprimer, en adoptant les mêmes notations que pour l'équation (1), sous la forme **x = Ha+n,** à la différence près que le vecteur **n** est ici de dimension *P'M,* le vecteur **a** de dimension *PM* et la matrice **H** de taille *P'M* × *PM.* Le vecteur **a** peut être considéré comme la concaténation de P sous-vecteurs **a^(1),a^(2),...,a^(P)** chaque sous-vecteur étant relatif à une source. La matrice **H** représente le canal de transmission et prend en compte les interférences multi-utilisateur et multi-trajet.

Si **R** est la matrice de taille *PM* × *PM* obtenue par transformation QR de la matrice **H, z= Q^TX** est un résumé exhaustif du signal reçu appartenant à l'espace des signaux transmis. Le décodage par sphère consiste à rechercher le point **â**, appartenant à l'intersection de la constellation produit et d'une boule de bruit centrée sur **z** et pour lequel la distance à **z** est minimale. On appelle constellation produit la constellation générée par toutes les positions des constellations PPM élémentaires. Le récepteur détermine parmi les $M^P$ points de la constellation produit, c'est-à-dire parmi les $M^P$ combinaisons de symboles PPM possibles émis par les $P$ sources, celle qui satisfait au critère de maximum de vraisemblance. On notera, comme précédemment, pour une matrice $\Omega$ quelconque de taille $PM \times PM$, $\Omega^{(\mathbf{i},\mathbf{j})}$ la sous-matrice de taille $M \times M$ de $\mathbf{R}$ constituée des éléments $\omega_{m,m'}$ avec $m=(i\text{-}1)M+1,..,iM$ et $m'=(j\text{-}1)M+1,..,jM$ , avec $1 \leq i,j \leq P$

et $\Omega^{(i,j)}_{m,m'}$ le $(m,m')$ ième élément de la matrice $\Omega^{(\mathbf{i},\mathbf{j})}$, c'est-à-dire $\Omega^{(i,j)}_{m,m'} = \omega_{m,m'}$ .

Le procédé de décodage utilise une égalisation ZF-DFE du signal transmis. Plus précisément, on calcule tout d'abord :

$$\mathbf{e_P} = \mathbf{V}\mathbf{z} \quad \text{avec} \quad \mathbf{V} = \mathbf{R}^{-1} \tag{15}$$

ou plus simplement puisque l'on commence par la dernière couche (couche d'ordre $P$), du fait de la forme triangulaire supérieure de la matrice $\mathbf{R}$ :

$$\mathbf{e_P^{(P)}} = \mathbf{V^{(p,p)}}\mathbf{z^{(p)}} \quad \text{avec} \quad \mathbf{V^{(p,p)}} = \left(\mathbf{R^{(p,p)}}\right)^{-1} \tag{16}$$

Le vecteur $\mathbf{e_P^{(P)}}$ est de dimension $M$ et à valeurs réelles. On détermine le symbole PPM $\mathbf{\hat{a}^{(P)}}$ le plus proche

de $\mathbf{e_P^{(P)}}$ au sens d'une certaine distance que nous détaillerons plus loin. Nous verrons que cette minimisation de distance revient à rechercher l'indice de la première composante de l'ensemble des composantes de $\mathbf{e_P^{(P)}}$ triées

selon une relation d'ordre. On note $pos(P)$ l'indice de cette composante. L'estimation ZF-DFE de $\mathbf{z^{(p)}}$ n'est autre que

$\mathbf{\hat{a}^{(P)}} = \mathbf{\hat{e}_P^{(P)}} = \mathbf{I^M_{.,pos(P)}}$ où $\mathbf{I^M}$ est la matrice unité de taille $M \times M$, autrement dit $\mathbf{\hat{a}^{(P)}}$ est un vecteur de taille $M$ dont les composantes sont nulles à l'exception de celle d'indice $pos(p)$, égale à 1.
On note $\mathbf{\hat{e}p}$ le vecteur de taille $MP$ dont les $(P\text{-}1)M$ premières composantes sont nulles et les $M$ dernières sont égales à celles de $\mathbf{\hat{e}_P^{(P)}}$ .

On soustrait des couches inférieures l'interférence due à la couche $P$ et l'on estime ensuite $\mathbf{\hat{a}^{(P\text{-}1)}}$, plus précisément :

$$\mathbf{e_{P-1}} = \mathbf{V}\left(\mathbf{z} - \mathbf{R}\mathbf{\hat{e}_P}\right), \tag{17}$$

ou encore, puisque $\mathbf{R}$ et $\mathbf{V}$ sont triangulaires supérieures :

$$\mathbf{e_{P-1}^{(P-1)}} = \mathbf{V^{(p-1,p-1)}}\left(\mathbf{z^{(p-1)}} - \mathbf{R^{(p-1,p)}}\mathbf{\hat{e}_P^{(p)}}\right) + \mathbf{V^{(p-1,p)}}\left(\mathbf{z^{(p)}} - \mathbf{R^{(p,p)}}\mathbf{\hat{e}_P^{(p)}}\right)$$

$$\tag{18}$$

et l'estimation ZF-DFE n'est autre que $\hat{\mathbf{a}}_{\mathbf{P}-1} = \hat{\mathbf{e}}_{\mathbf{P}-1}^{(\mathbf{P}-1)} = \mathbf{I}_{.,\mathbf{pos}(\mathbf{P}-1)}^{\mathbf{M}}$ où *pos*(*P*-1) est l'indice de la première composante après l'opération de tri, comme précédemment indiqué.

On procède ainsi de couche en couche, en éliminant à chaque couche *p*, l'interférence due aux *P* - *p* couches supérieures. Lorsque les *P* couches ont été soumises à l'égalisation ZF-DFE, on dispose d'un vecteur **â** défini par la concaténation des **â⁽ᵖ⁾** pour *p*=1,..,*P*.

Ce vecteur peut être représenté par un point de la constellation produit. On part de ce point pour rechercher le plus proche voisin de **z**. La recherche se poursuit ensuite au sein de ladite constellation, selon une méthode d'énumération exposée ci-après.

On a vu plus haut que, pour chaque couche *p*, on déterminait le symbole **â⁽ᵖ⁾** le plus proche de $\mathbf{e}_{\mathbf{p}}^{(\mathbf{p})}$ . Afin d'alléger les notations, nous noterons ici $\alpha^{\mathbf{p}} = \hat{\mathbf{a}}^{(\mathbf{p})}$ et $\mathbf{\eta}^{\mathbf{p}} = \mathbf{e}_{\mathbf{p}}^{(\mathbf{p})}$ . La contribution de cette couche à la distance quadratique entre **z** et **â** peut s'écrire :

$$d_p = \sum_{m=1}^{M}\left(\sum_{m'=m}^{M}R_{m,m'}^{(p,p)}\left(\alpha_{m'}^{P} - \eta_{m'}^{P}\right)\right)^2 = \left\|\mathbf{R}^{(\mathbf{p},\mathbf{p})}\left(\alpha^{\mathbf{p}} - \eta^{\mathbf{p}}\right)\right\|^2 \qquad (19)$$

puisque **R** est triangulaire supérieure. $\alpha^{\mathbf{P}}$ étant un symbole PPM, $\alpha_{m'}^{P} = \delta\left(m' - m_0\right)$ , $m_0 \in \{1,..M\}$ $m_0 \in \{1,..M\}$ c'est-à-dire que l'on suppose que la p$^{\text{ième}}$ source transmet un symbole PPM en position $m_0$. La contribution à la distance quadratique s'exprime alors :

$$d_p = \left\|\mathbf{R}^{(\mathbf{p},\mathbf{p})}\left(\mathbf{I}_{.,\mathbf{m_0}} - \mathbf{\eta}^{\mathbf{p}}\right)\right\|^2 = \left\|\mathbf{R}_{.,\mathbf{m_0}}^{(\mathbf{p},\mathbf{p})} - \mathbf{E}^{(\mathbf{p})}\right\|^2$$

$$(20)$$

avec $\mathbf{E}^{(\mathbf{p})} = \mathbf{R}^{(\mathbf{p},\mathbf{p})}\mathbf{\eta}^{\mathbf{p}}$ .

On notera qu'en l'absence d'interférence entre les différentes positions de modulation, c'est-à-dire si la réponse impulsionnelle du canal de transmission est plus courte que l'écart temporel entre ces positions, la matrice **R⁽ᵖ,ᵖ⁾** est diagonale et que la distance quadratique $d_p$ se confond avec l'écart quadratique entre le symbole PPM testé ($m=m_0$) et le signal égalisé par source.

Pour chaque couche, on peut classer les symboles PPM (autrement dit les positions PPM) à partir des contributions respectives qu'ils apporteraient à la distance quadratique. Le premier choix dans l'énumération des candidats dans cette couche porte comme on l'a vu plus haut, sur :

$$pos(p) = \arg\min_{m}\left(\left\|\mathbf{R}_{.,\mathbf{m}}^{(\mathbf{p},\mathbf{p})} - \mathbf{E}^{(\mathbf{p})}\right\|^2\right) \qquad (21)$$

puis l'on passe successivement aux positions réalisant des contributions de plus en plus élevées.

Etant donné que **E⁽ᵖ⁾** ne dépend pas de *m*, le classement des distances quadratiques $d_p$ est équivalent à celui des produits scalaires :

$$\left\{-2\left(\mathbf{R}_{.,m}^{(p,p)}\right)^{\mathbf{T}}\mathbf{E}^{(p)}+\left(\mathbf{R}_{.,m}^{(p,p)}\right)^{\mathbf{T}}\mathbf{R}_{.,m}^{(p,p)};\ m=1,..,M\right\} \tag{22}$$

et par conséquent :

$$pos(p)=\arg\min_{m}\left(-2\left(\mathbf{R}_{.,m}^{(p,p)}\right)^{\mathbf{T}}\mathbf{E}^{(p)}+\left(\mathbf{R}_{.,m}^{(p,p)}\right)^{\mathbf{T}}\mathbf{R}_{.,m}^{(p,p)}\right). \tag{23}$$

Le décodage par sphère commence par la dernière couche (couche $P$). On ordonne la liste des symboles PPM de cette couche en fonction des contributions respectives qu'ils apporteraient à la distance quadratique au point reçu. On sélectionne d'abord celui qui apporterait la plus faible contribution, ce qui donne une estimation du symbole émis par la source $P$. On élimine l'interférence générée par ce symbole sur toutes les couches inférieures. On passe ensuite à la couche immédiatement inférieure et on recommence ainsi pour chaque couche.

Plus précisément, pour une couche courante donnée on ordonne la liste des positions PPM de cette couche en fonction des contributions qu'apporteraient les symboles correspondants à la distance quadratique au point reçu. On sélectionne celle réalisant la plus faible contribution en utilisant (21) ou (23). On élimine ensuite des couches inférieures l'interférence générée par le symbole PPM ainsi sélectionné.

On progresse ainsi de couche en couche, les symboles sélectionnés dans les différentes couches forment une branche. Si la somme des contributions des couches supérieures et de la couche courante est supérieure au rayon courant de la sphère, on abandonne la branche en question et on passe à la couche supérieure à la couche courante pour sélectionner une nouvelle position PPM. A l'inverse, on poursuit la branche jusqu'à ce que l'on atteigne la couche de rang 1. La distance quadratique entre le point **â** de la constellation produit au point reçu est obtenue comme la somme des contributions des différentes couches. Si la distance est plus faible que le rayon courant de la sphère, le rayon ainsi que le meilleur point courant $\mathbf{\hat{a}_{opt}}$ sont mis à jour. Plus précisément, le nouveau rayon de la sphère prend la valeur de ladite distance et $\mathbf{\hat{a}_{opt}} = \mathbf{\hat{a}}$.

On retourne ensuite à la couche immédiatement supérieure pour sélectionner le second symbole PPM de la liste. On élimine des couches inférieures (en l'occurrence de la couche de rang 1) l'interférence générée par ce symbole et l'on procède comme précédemment vers les couches inférieures.

A chaque remontée vers une couche supérieure, on sélectionne successivement les différents symboles de cette couche dans l'ordre de la liste en commençant par la contribution la plus faible. Lorsque la liste est épuisée, c'est-à-dire lorsque l'on a déjà précédemment testé les $M$ symboles de cette liste, on passe à la couche supérieure suivante.

On progresse ainsi, par remontées successives vers des couches de rangs de plus en plus élevés et avec des intervalles de validité de plus en plus étroits (étant donné que le rayon de la sphère est mis à jour), jusqu'à ce que l'on ait épuisé la liste de la couche racine (couche $P$), auquel cas l'algorithme s'arrête. En sortie de décodage, le meilleur point en sortie $\mathbf{\hat{a}_{opt}}$ est celui qui réalise le minimum de distance à $\mathbf{z}$. Le point $\mathbf{\hat{a}_{opt}}$ fournit l'estimation ML des symboles PPM transmis par les $P$ sources, soit $\mathbf{\hat{a}_{opt}^{(1)}}, \mathbf{\hat{a}_{opt}^{(2)}}, \ldots, \mathbf{\hat{a}_{opt}^{(P)}}$.

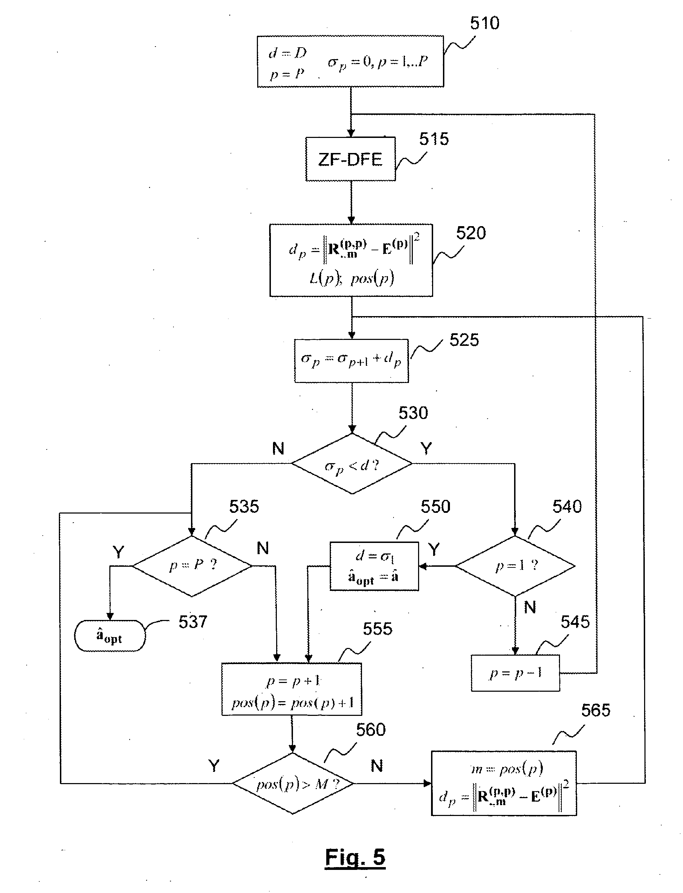

La Fig. 5 représente de manière schématique l'organigramme du procédé de décodage par sphère d'une pluralité de sources PPM selon l'invention.

A l'étape 510, on initialise l'indice de couche par celui de la plus haute, $p=P$. On initialise les variables intermédiaires, notamment le rayon quadratique $d$ de la sphère, $d = D$ et $P$ variables représentant respectivement la somme des contributions à la distance quadratique jusqu'aux $P$ couches respectives $\sigma_p = \sum_{k=p}^{P} d_p$,

soit $\sigma_p = 0$ pour $p = 1,..,P$.

A l'étape 515, on effectue l'égalisation ZF-DFE de la couche courante $p$ compte tenu des symboles $\mathbf{\hat{a}^{(P)}}, \mathbf{\hat{a}^{(P-1)}}, \ldots, \mathbf{\hat{a}^{(p+1)}}$

sélectionnés dans les couches supérieures précédentes.

A l'étape 520, on classe les symboles PPM de cette couche selon la relation d'ordre (20) ou (22). On dispose ainsi d'une liste ordonnée $L(p)$ et on choisit le premier symbole PPM de cette liste.

A l'étape 525, on met à jour $\sigma_p$, la somme des contributions des couches $p,..,P$ à la distance euclidienne à **z,** soit $\sigma_p = \sigma_{p+1} + d_p$.

On teste ensuite si la somme de ces contributions excède le rayon quadratique courant $d$ de la sphère. Si c'est le cas, il est inutile de conserver la branche courante $\hat{a}^{(P)}, \hat{a}^{(P-1)}, ..., \hat{a}^{(p)}$ puisque elle ne pourra, quels que soient les symboles que l'on sélectionnera dans les couches inférieures suivantes, conduire au plus proche voisin. On passe alors au test 535. Par contre si $\sigma_p$ est inférieure au dit rayon quadratique on passe au test 540.

En 535, on teste si $p = P$. Si c'est le cas l'algorithme s'arrête en 537 et le plus proche voisin de **z** appartenant au réseau est $\hat{a}_{opt}$.

Si $p \neq P$, on incrémente $p$ et $pos(p)$ de 1 en 555, c'est-à-dire que l'on passe à la couche supérieure et on sélectionne le symbole PPM suivant dans la liste $L(p)$, s'il existe.

On teste en 560 si l'on a épuisé les symboles de la liste $L(p)$. Dans l'affirmative ($pos(p) > M$), on retourne au test 535. Dans la négative, on met à jour la valeur de $d_p$ correspondant au nouveau symbole sélectionné et on retourne à l'étape 525. En pratique, si l'on a préalablement calculé et stocké les valeurs $d_p$ pour les différentes valeurs de $m$ $=1,..,M$, il n'est pas nécessaire de recalculer $d_p$.

Si l'on décide de conserver la branche courante $\hat{a}^{(P)}, \hat{a}^{(p-1)}, .... \hat{a}^{(p)}$ en 530, on teste en 540 si cette branche a atteint la couche la plus basse ($p=1$), auquel cas on dispose d'un point du réseau améliorant la distance courante à **z** et l'on passe à l'étape 550. Si, en revanche ce n'est pas le cas ($p \neq 1$), on passe à la couche inférieure suivante en 545, puis on retourne à l'étape d'égalisation ZF-DFE.

A l'étape 550, on met à jour le rayon de la sphère, soit $d = \sigma_1$ et le meilleur candidat $\hat{a}_{opt} = \hat{a}$, puis on poursuit la recherche en incrémentant $p$ à l'étape 555.

Le meilleur candidat donne une estimation ML conjointe $\hat{a}_{opt}^{(1)}$, $\hat{a}_{opt}^{(2)}$, $.. \hat{a}_{opt}^{(P)}$ des symboles PPM émis par les $P$ sources.

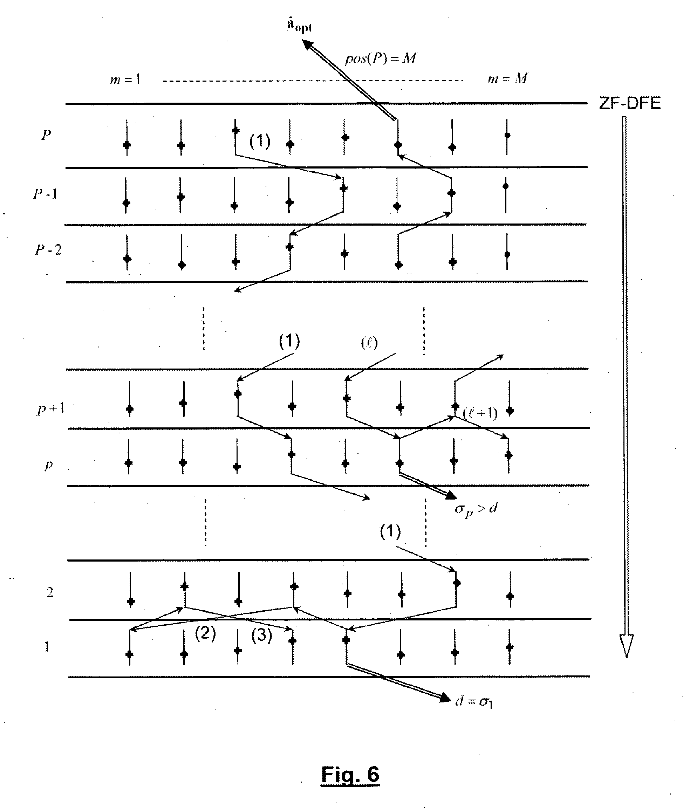

On a illustré en Fig. 6 la progression du décodage par sphère au sein de la constellation produit. L'espace des symboles transmis est divisé en $P$ couches, chacune étant de dimension $M$. On a représenté en ordonnées pour chacune des positions PPM de chaque couche $p$ les $M$ composantes de $e_p^{(p)}$, obtenues comme on l'a vu par égalisation ZF-DFE.

La branche notée (1) est la première branche testée. Dans le cas présent, la branche progresse jusqu'à la couche la plus basse et améliore la distance quadratique à **z**. Le rayon quadratique $d$ de la sphère est alors mis à jour. On passe à la couche 2 et le test d'une nouvelle branche (2). Etant donné que l'on a sélectionné un nouveau candidat dans la couche (2), on procède préalablement à une nouvelle égalisation de la couche 1.

On a représenté par $(\ell)$ une branche en cours de test. On remarque que lorsque cette branche atteint la couche $p$, la somme $\sigma_p$ des contributions des couches supérieures et de la couche courante $P, P-1,..,p$, excède le rayon quadratique courant $d$ de la sphère. La recherche se poursuit en passant à la couche supérieure $p+1$ et en sélectionnant dans cette couche le symbole PPM suivant de la liste $L(p+1)$ (cf. étape 555 de la Fig. 5). On actualise alors la somme des contributions, $\sigma_{p+1}$. Si cette somme est inférieure à $d$ on poursuit avec la nouvelle branche $(\ell+1)$, sinon on remonte d'une couche.

Lorsque l'on atteint la couche la plus haute (cf. étape 535 de la Fig. 5) et que soit on a épuisé les symboles de la liste $L(P)$, soit la contribution de la couche $P$ excède $d$, l'algorithme de décodage se termine en fournissant $\hat{a}_{opt}$.

On a donné en annexe le pseudo-code de la méthode de décodage par sphère selon une réalisation possible de l'invention. Les notations suivantes ont été adoptées :

$0_M$ est le vecteur nul de taille $M$ ;

$\rho$ est un vecteur de taille $M$ ;

$e$ et $E$ sont des matrices de taille $MP \times P$, les colonnes de $e$ donnent le résultat de l'égalisation ZF-DFE ;

$A$ matrice de taille $M \times P$ dont les colonnes sont les symboles PPM sélectionnés pour les différentes couches ;

**Order** matrice de taille $M \times P$ dont les colonnes donnent les listes d'indices $L(p)$ précitées pour chacune des couches ;

**Diag($\Omega$)** est la matrice diagonale composée des éléments diagonaux de la matrice $\Omega$ **;**

$sort(\omega)$ est un vecteur constitué des composantes du vecteur $\omega$ triées par ordre croissant.

La méthode de décodage par sphère exposée ci-dessus est destinée à être implémentée grâce à des moyens logiciels ou matériels dans un récepteur ML opérant dans un système multi-source, par exemple un système MIMO et/ou un système multi-utilisateur. Avantageusement, les symboles PPM d'une source servent à moduler un signal impulsionnel du type TH-UWB (*Time Hopped* UWB), DS-UWB (*Direct Spread* UWB) ou TH-DS-UWB. Les signaux ainsi modulés sont transmis par exemple grâce à des antennes UWB conventionnelles ou des diodes laser.

**Annexe**

Décodage par sphère (input : z, **R**, *P, M, D;* output : **â**$_{\mathbf{opt}}$)

**Step 1** (Initialisation):

$$\text{Set } k = P+1 \,;\, dist(k) = 0 \,;\, \mathbf{V} = \mathbf{R}^{-1};\, \boldsymbol{\rho} = \mathbf{0}_{\mathbf{M}}\,;\, bestdist = D.$$

**Step 2:**

$$newdist = dist(k) + \boldsymbol{\rho}^{\mathbf{T}}\boldsymbol{\rho}\,;$$

if ( $newdist < bestdist$ ) & ( $k \neq 1$ ) go to Step 3 else go to Step 4 endif.

**Step 3:**

$$\text{if } k = P+1,\, \mathbf{e}_{.,\mathbf{k-1}} = \mathbf{Vz}\ \text{else}$$

$$\text{For } i = 1,..,k-1,\, \mathbf{e}^{(\mathbf{i})}_{.,\mathbf{k-1}} = \mathbf{e}^{(\mathbf{i})}_{.,\mathbf{k}} - \mathbf{V}^{(\mathbf{i,k})}\boldsymbol{\rho}\ \text{endfor endif.}$$

$$k = k-1,\, dist(k) = newdist\,,$$

$$\mathbf{E}^{(\mathbf{k})}_{.,\mathbf{k}} = \mathbf{R}^{(\mathbf{k,k})}\mathbf{e}^{(\mathbf{k})}_{.,\mathbf{k}}\,,$$

$$\mathbf{Order}_{.,\mathbf{k}} = \text{sort}\left[ -2\left(\mathbf{R}^{(\mathbf{k,k})}\right)^{\mathbf{T}}\mathbf{E}^{(\mathbf{k})}_{.,\mathbf{k}} + \mathbf{Diag}\left( \left(\mathbf{R}^{(\mathbf{k,k})}\right)^{\mathbf{T}}\mathbf{R}^{(\mathbf{k,k})}\right)\right]$$

$$step(k) = 1,\, pos(k) = Order_{step(k),k}\,,\, \mathbf{A}_{.,\mathbf{k}} = \mathbf{I}_{.,\mathbf{pos(k)}}\,,$$

$$\boldsymbol{\rho} = \mathbf{E}^{(\mathbf{k})}_{.,\mathbf{k}} - \mathbf{R}^{(\mathbf{k,k})}_{.,\mathbf{pos(k)}}\,,\ \text{go to Step 2.}$$

**Step 4:**

$$\text{if } newdist < bestdist,\, bestdist = newdist$$

$$\text{for } i = 1,...,P,\, \hat{\mathbf{a}}^{(\mathbf{i})}_{\mathbf{opt}} = \mathbf{A}_{.,\mathbf{i}}\ \text{endfor}$$

$$\text{else if } k = P,\ \text{terminate else } k = k+1\ \text{endif.}$$

$$step(k) = step(k) + 1\,,$$

$$\text{if } step(k) > M,\ \text{go to Step 4 endif,}$$

$$pos(k) = Order_{step(k),k}\,,\, \mathbf{A}_{.,\mathbf{k}} = \mathbf{I}_{.,\mathbf{pos(k)}}\,,$$

$$\boldsymbol{\rho} = \mathbf{E}^{(\mathbf{k})}_{.,\mathbf{k}} - \mathbf{R}^{(\mathbf{k,k})}_{.,\mathbf{pos(k)}}\,,\ \text{go to Step 2.}$$

**Revendications**

1. Procédé de décodage par sphère pour récepteur à maximum de vraisemblance destiné à recevoir des symboles PPM d'une pluralité $P$ de sources, chaque source émettant un flux de symboles PPM à $M$ positions de modulation, $P$ symboles PPM émis simultanément par les $P$ sources étant représentés par un point (**a**) de la constellation de modulation produit dans un espace des signaux transmis de dimension **MP** décomposé en $P$ couches, chaque couche représentant les $M$ positions de modulation possibles d'un symbole PPM émis par cette source, le signal reçu (**x**) par ledit récepteur étant transformé en un point représentatif (**z**) de ce signal, dit point reçu, dans l'espace des signaux transmis, ledit procédé déterminant le point de la constellation produit le plus proche (**â_opt**) du point reçu à l'intérieur d'une sphère de rayon quadratique donné,
**caractérisé en ce que,** pour chaque couche de rang $p$ :

(a) on effectue une égalisation ZF-DFE du signal reçu dans ladite couche compte tenu des symboles PPM estimés dans les $P$-$p$ couches précédentes, dites couches supérieures à la couche **$p$ ;**
(b) on classe dans une liste les $M$ symboles PPM de ladite couche en fonction des contributions qu'ils apporteraient à la distance quadratique au point reçu ;
(c) on sélectionne le symbole PPM réalisant la plus faible contribution ($d_p$) et l'on ajoute cette contribution à celles obtenues pour les couches précédentes pour obtenir une somme de contributions ($\sigma_p$);
les étapes (a),(b),(c) étant répétées jusqu'à ce que l'on atteigne la couche la plus basse ; et
l'on met à jour le rayon quadratique de la sphère et ledit point le plus proche si ladite somme de contributions est inférieure au rayon quadratique de la sphère.

2. Procédé de décodage par sphère selon la revendication 1, **caractérisé en ce que,** si pour une couche donnée et un symbole PPM sélectionné dans cette couche, ladite somme des contributions excède le rayon quadratique de la sphère, on passe à la couche supérieure et on sélectionne dans cette couche le symbole suivant de la liste qui lui est associée.

3. Procédé de décodage par sphère selon la revendication 2, **caractérisé en ce que** si tous les symboles de ladite liste associée ont déjà fait l'objet d'une sélection, on passe à la couche encore supérieure pour y sélectionner dans cette dernière le symbole suivant dans la liste qui lui est associée.

4. Procédé de décodage par sphère selon la revendication 2 ou 3, **caractérisé en ce que** si l'on a atteint la couche la plus haute et que, soit l'on a sélectionné tous les symboles PPM de ladite couche, soit la contribution de ladite couche calculée pour le symbole sélectionné excède le rayon quadratique de la sphère, le procédé de décodage se termine en fournissant ledit point le plus proche (**â_opt**).

5. Procédé de décodage par sphère selon la revendication 4, **caractérisé en ce que** les symboles PPM des sources de rangs respectifs $1,..,P$, estimés au sens du maximum de vraisemblance, sont obtenus comme sous-vecteurs
( $\hat{\mathbf{a}}_{\mathbf{opt}}^{(\mathbf{1})}$ , $\hat{\mathbf{a}}_{\mathbf{opt}}^{(\mathbf{2})}$ , $..$ $\hat{\mathbf{a}}_{\mathbf{opt}}^{(\mathbf{P})}$ ) à $M$ composantes du vecteur à $MP$ composantes représentant ledit point le plus proche (**â_opt**).

6. Procédé de décodage par sphère selon l'une des revendications précédentes, **caractérisé en ce que** la contribution $d_p$ d'une couche de rang $p, p \in \{1,..,P\}$ est calculée par :

$$d_{\dot{p}} = \left\| \mathbf{R}_{.,\mathbf{m}}^{(\mathbf{p},\mathbf{p})} - \mathbf{E}^{(\mathbf{p})} \right\|^2$$

avec

$$\mathbf{E^{(p)}} = \mathbf{R^{(p,p)}\eta^p}$$

où

$\mathbf{R^{(p,p)}}$ est la $p^{\text{ième}}$ sous-matrice de taille $M \times M$ sur la diagonale de la matrice triangulaire supérieure $\mathbf{R}$ de taille $MP \times MP$, obtenue par transformation QR d'une matrice $\mathbf{H}$ représentative du canal de transmission entre les $P$ sources et ledit récepteur ;

$\eta^\mathbf{p}$ est le résultat de l'égalisation ZF-DFE à la couche $p$ ;

$\mathbf{R^{(p,p)}_{.,m}}$ est la $m^{\text{ième}}$ colonne de la matrice $\mathbf{R^{(P,P)}}$, où $m \in \{1,..,M\}$ est la position de modulation du symbole PPM sélectionné dans la couche $p$ ; et $\|\Omega\|^2 = \Omega^\mathbf{T}\Omega$,

**7.** Procédé de décodage par sphère selon la revendication 6, **caractérisé en ce que** le classement des positions $m \in \{1,..,M\}$ des symboles PPM de la couche $p$ est réalisé en ordonnant ces symboles selon les valeurs :

$$\left\{ -2\left(\mathbf{R^{(p,p)}_{.,m}}\right)^\mathbf{T} \mathbf{E^{(p)}} + \left(\mathbf{R^{(p,p)}_{.,m}}\right)^\mathbf{T} \mathbf{R^{(p,p)}_{.,m}}; \ m = 1,..,M \right\}$$

**8.** Procédé de décodage par sphère selon la revendication 7, **caractérisé en ce que** le symbole PPM de la couche $p$ réalisant la plus faible contribution correspond à la position de modulation $pos(p)$ obtenue par :

$$pos(p) = \arg\min_m \left( -2\left(\mathbf{R^{(p,p)}_{.,m}}\right)^\mathbf{T} \mathbf{E^{(p)}} + \left(\mathbf{R^{(p,p)}_{.,m}}\right)^\mathbf{T} \mathbf{R^{(p,p)}_{.,m}} \right)$$

**9.** Récepteur à maximum de vraisemblance destiné à recevoir des symboles PPM d'une pluralité $P$ de sources, comprenant un filtre adapté au canal de transmission entre les sources et le récepteur et, le cas échéant, au codage spatio-temporel utilisé à l'émission, **caractérisé en ce qu'**il comprend en outre un décodeur par sphère comprenant des moyens adaptés à exécuter les étapes du procédé de décodage par sphère selon l'une des revendications précédentes, le décodeur par sphère recevant en entrée la sortie dudit filtre adapté.

**Claims**

**1.** Sphere decoding method for a maximum likelihood receiver for receiving PPM symbols from a plurality $P$ of sources, each source outputting a flow of PPM symbols with $M$ modulation positions, $P$ PPM symbols output simultaneously by the $P$ sources being represented by a point (a) of the modulation product constellation in a space of transmitted signals of dimension $MP$ decomposed into $P$ layers, each layer representing the $M$ possible modulation positions of a PPM symbol output by this source, the signal (x) received by said receiver being transformed into a point (z) representative of this signal, referred to as the received point, in the space of the transmitted signals, said method determining the point ($\hat{a}_{opt}$) of the product constellation closest to the received point within a sphere of a given quadratic radius, **characterised in that** for each layer of rank $p$:

(a) ZF-DFE equalisation is performed on the signal received in said layer, taking into account the PPM symbols estimated in the $P-p$ previous layers, referred to as layers higher than the layer $p$;
(b) the $M$ PPM symbols of said layer are sorted in a list as a function of the contributions that they would make to the quadratic distance to the received point;
(c) the PPM symbol making the lowest contribution ($d_p$) is selected and this contribution is added to those obtained for the previous layers to obtain a sum of contributions ($\sigma_p$);

steps (a), (b) and (c) being repeated until the lowest layer has been reached; and
the quadratic radius of the sphere and said closest point are updated if said sum of contributions is lower than the quadratic radius of the sphere.

2. Sphere decoding method according to claim 1, **characterised in that** if for a given layer and a PPM symbol selected from this layer said sum of contributions exceeds the quadratic radius of the sphere, the decoding method moves on to the layer above and selects from this layer the following symbol from the list which is associated therewith.

3. Sphere decoding method according to claim 2, **characterised in that** if all the symbols of said associated list have already been the subject of a selection, the decoding method moves on to the next layer up in order to select from this layer the following symbol in the list which is associated therewith.

4. Sphere decoding method according to either claim 2 or claim 3, **characterised in that** if the highest layer has been reached, and if either all the PPM symbols of said layer have been selected or the contribution of said layer calculated for the selected symbol exceeds the quadratic radius of the sphere, then the decoding method ends by providing said closest point ($\hat{a}_{opt}$).

5. Sphere decoding method according to claim 4, **characterised in that** the PPM symbols of the respective sources of ranks 1, ..., $P$, estimated in the sense of the maximum likelihood, are obtained as $M$-component sub-vectors $(\hat{a}_{opt}^{(1)}, \hat{a}_{opt}^{(2)}, ..., \hat{a}_{opt}^{(P)})$ of the $MP$-component vector representing said closest point ($\hat{a}_{opt}$).

6. Sphere decoding method according to any one of the preceding claims, **characterised in that** the contribution $d_p$ of a layer of rank $p$, $p \in \{1, ..., P\}$ is calculated using:

$$d_p = \left\| R_{,m}^{(p,p)} - E^{(p)} \right\|^2$$

with

$$E^{(p)} = R^{(p,p)} \eta^p$$

where
$R^{(p,p)}$ is the $p^{th}$ sub-matrix of size $M \times M$ on the diagonal of the upper triangular matrix R of size $MP \times MP$, obtained by the transformation QR of a matrix H representative of the transmission channel between the $P$ sources and said receiver;
$\eta^p$ is the result of the ZF-DFE equalisation on the layer $p$;
$R_{,m}^{(p,p)}$ is the $m^{th}$ column of the matrix $R^{(p,p)}$, where $m \in \{1, ..., M\}$ is the modulation position of the PPM symbol selected from the layer $p$; and $\|\Omega\|^2 = \Omega^T \Omega$

7. Sphere decoding method according to claim 6, **characterised in that** the sorting of the positions $m \in \{1, ..., M\}$ of the PPM symbols of the layer $p$ is carried out by arranging these symbols in order according to the values:

$$\left\{ -2\left(R_{,m}^{(p,p)}\right)^T E^{(p)} + \left(R_{,m}^{(p,p)}\right)^T R_{,m}^{(p,p)} ; m = 1,...,M \right\}$$

8. Sphere decoding method according to claim 7, **characterised in that** the PPM symbol of the layer $p$ making the lowest contribution corresponds to the modulation position *pos*(*p*) obtained by:

$$pos(p) = \arg\ \min_m\left(-2\left(R_{,m}^{(p,p)}\right)^T E^{(p)} + \left(R_{,m}^{(p,p)}\right)^T R_{,m}^{(p,p)}\right)$$

**9.** Maximum likelihood receiver intended to receive PPM symbols from a plurality *P* of sources, comprising a filter matched to the transmission channel between the sources and the receiver and, if necessary, to the spatio-temporal coding used at the emission, **characterised in that** it further comprises a sphere decoder comprising means for carrying out the steps of the sphere decoding method according to any one of the preceding claims, the sphere decoder receiving as an input the output of said matched filter.

**Patentansprüche**

**1.** Verfahren zum sphärischen Decodieren für einen Empfänger mit maximaler Wahrscheinlichkeit, der dazu bestimmt ist, PPM Symbole einer Mehrzahl *P* von Quellen zu empfangen, wobei jede Quelle einen Fluss von PPM Symbolen mit *M* Modulationspositionen emittiert, wobei *P* PPM Symbole, die durch die *P* Quellen gleichzeitig emittiert werden, durch einen Punkt (a) der Produktmodulationskonstellation repräsentiert werden, die in einem Raum gesendeter Signale mit Dimension *MP,* der in *P* Schichten zerlegt ist, wobei jede Schicht die *M* möglichen Modulationspositionen eines PPM Symbols, das von dieser Quelle emittiert wird, repräsentiert, wobei das von dem Empfänger empfangene Signal (x) in dem Raum der gesendeten Signale in einen für dieses Signal repräsentativen Punkt (z), der empfangener Punkt genannt wird, transformiert wird, wobei das Verfahren den Punkt (â$_{opt}$) der Produktmodulationskonstellation bestimmt, der sich am nächsten bei dem empfangenen Punkt innerhalb einer Sphäre mit gegebenem quadratischen Radius befindet, **dadurch gekennzeichnet, dass** für jede Schicht mit Rang *p*:

(a) eine ZF-DFE Glättung des empfangenen Signals in der Schicht unter Berücksichtigung der PPM Symbole, die in den vorhergehenden *P-p* Schichten, die obere Schichten der Schicht *p* genannt werden, geschätzt werden, ausgeführt wird;
(b) in einer Liste die *M* PPM Symbole der Schicht in Abhängigkeit von den Beiträgen, die sie zum quadratischen Abstand zum empfangenen Punkt beitragen würden, klassifiziert werden;
(c) das PPM Symbol, das den geringsten Beitrag (*dp*) bewirkt, ausgewählt wird und dieser Beitrag zu jenen hinzugefügt wird, die für die vorhergehenden Schichten erhalten werden, um eine Summe von Beiträgen (σ$_p$) zu erhalten;

wobei die Schritte (a), (b), (c) wiederholt werden, bis die niedrigste Schicht erreicht ist; und
der quadratische Radius der Sphäre und der nächste Punkt aktualisiert werden, falls die Summe der Beiträge kleiner als der quadratische Radius der Sphäre ist.

**2.** Verfahren zum sphärischen Decodieren nach Anspruch 1, **dadurch gekennzeichnet, dass** dann, wenn für eine gegebene Schicht und ein in dieser Schicht ausgewähltes PPM Symbol die Summe der Beiträge den quadratischen Radius der Sphäre übersteigt, zu der oberen Schicht übergegangen wird und in dieser Schicht das folgende Symbol der Liste, die ihr zugeordnet ist, ausgewählt wird.

**3.** Verfahren zum sphärischen Decodieren nach Anspruch 2, **dadurch gekennzeichnet, dass** dann, wenn alle Symbole der zugeordneten Liste bereits Gegenstand einer Auswahl gewesen sind, zu der noch höheren Schicht übergegangen wird, um hier in dieser Letzteren das folgende Symbol der Liste, die ihr zugeordnet ist, auszuwählen.

**4.** Verfahren zum sphärischen Decodieren nach Anspruch 2 oder 3, **dadurch gekennzeichnet, dass** dann, wenn die höchste Schicht erreicht ist und entweder alle PPM Symbole der Schicht ausgewählt worden sind oder der Beitrag der Schicht, der für das ausgewählte Symbol berechnet wird, den quadratischen Radius der Sphäre übersteigt, das Decodierungsverfahren endet und den nächsten Punkt (â$_{opt}$) liefert.

**5.** Verfahren zum sphärischen Decodieren nach Anspruch 4, **dadurch gekennzeichnet, dass** die PPM Symbole der Quellen mit jeweiligem Rang 1, ..., *P*, die im Sinne der maximalen Wahrscheinlichkeit geschätzt werden, als Untervektoren $\left(\hat{a}_{opt}^{(1)}, \hat{a}_{opt}^{(2)}, ..., \hat{a}_{opt}^{(P)}\right)$ mit $M$ Komponenten des Vektors mit $MP$ Komponenten, der den nächsten Punkt ($\hat{a}_{opt}$) repräsentiert, erhalten werden.

**6.** Verfahren zum sphärischen Decodieren nach einem der vorhergehenden Ansprüche, **dadurch gekennzeichnet, dass** der Beitrag $d_p$ einer Schicht mit Rang $p$, $p \in \{1,...,P\}$ berechnet wird durch:

$$d_p = \left\|R_{.,m}^{(p,p)} - E^{(p)}\right\|^2, \text{ mit } E^{(p)} = R^{(p,p)}\eta^p$$

wobei R(P,P) die p-te Untermatrix mit Größe $M \times M$ auf der Diagonalen der oberen Dreiecksmatrix R mit Größe $MP \times MP$, die durch QR-Transformation einer Matrix H erhalten wird, die den Übertragungskanal zwischen den $P$ Quellen und dem Empfänger repräsentiert, ist;

$\eta^p$ das Ergebnis der ZF-DFE Glättung der Schicht p ist;

$R_{.,m}^{(p,p)}$ die m-te Spalte der Matrix R(P,P) ist, wobei $m \in \{1,...,M\}$ die Modulationsposition des ausgewählten PPM Symbols in der Schicht $p$ ist; und $\|\Omega\|^2 = \Omega^T\Omega$.

**7.** Verfahren zum sphärischen Decodieren nach Anspruch 6, **dadurch gekennzeichnet, dass** die Klassifiizierung der Positionen $m \in \{1,...,M\}$ der Symbole PPM der Schicht $p$ **dadurch** ausgeführt wird, dass diese Symbole gemäß den Werten

$$\left\{-2\left(R_{.,m}^{(p,p)}\right)^T E^{(p)} + \left(R_{.,m}^{(p,p)}\right)^T R_{.,m}^{(p,p)}; m = 1,...,M\right\}$$

geordnet werden.

**8.** Verfahren zum sphärischen Decodieren nach Anspruch 7, **dadurch gekennzeichnet, dass** das Symbol PPM der Schicht $p$, das den geringsten Beitrag bewirkt, der Modulationsposition $pos(p)$ entspricht, die erhalten wird durch

$$pos(p) = \underset{m}{\arg\min}\left(-2\left(R_{.,m}^{(p,p)T}E^{(p)} + \left(R_{.,m}^{(p,p)}\right)^T R_{.,m}^{(p,p)}\right)\right)$$

**9.** Empfänger mit maximaler Wahrscheinlichkeit, der dazu bestimmt ist, PPM Symbole von einer Mehrzahl $P$ von Quellen zu empfanden, der ein Filter umfasst, das an den Übertragungskanal zwischen den Quellen und dem Empfänger und gegebenenfalls an die bei der Emission verwendete raumzeitliche Codierung angepasst ist, **dadurch gekennzeichnet, dass** er außerdem einen sphärischen Decodierer umfasst, der Mittel enthält, die dazu ausgelegt sind, die Schritte des Verfahrens zum sphärischen Decodieren nach einem der vorhergehenden Ansprüche auszuführen, wobei der sphärische Decodierer am Eingang die Ausgabe des angepassten Filters empfängt.

**Fig. 1**

210

$$i = P \qquad T_P = 0$$
$$E_P = 0 \qquad d = D$$

220

$$T_i > d \,?$$

Y

223

$$i = P$$

225

$$\hat{a}$$

N

227

$$i = i + 1$$

N

230

$$A_i \qquad B_i$$
$$a_i = A_i - 2$$

240

$$a_i = a_i + 2$$

250

$$a_i \le B_i \ ?$$

N

Y

263

$$T_{i-1} = T_i + \left| z_i - E_i - r_{i,i} a_i \right|^2$$
$$E_{i-1}$$
$$i = i - 1$$

N

260

$$i = 1 \,?$$

Y

270

$$\hat{d} = T_1 + \left| z_1 - E_1 - r_{1,1} a_1 \right|^2$$

280

$$\hat{d} < d$$

N

Y

290

$$d = \hat{d} \qquad \hat{a} = a$$

**Fig. 2**

21

**310**
$$i = P \qquad T_P = 0$$
$$\xi_P = 0 \qquad d = D$$

**320**
$$e_i = (z_i - \xi_i) / r_{ii}$$
$$\hat{e}_i = round(e_i)$$
$$\delta_i = \mathrm{sgn}(e_i - \hat{e}_i)$$

**330**
$$T_i + r_{ii}(a_i - e_i)^2 < d \quad ?$$
N

Y

**340**
$$|a_i| \le M' - 1$$
N

Y

**350**
$$i = P$$
Y

N

**355**
$$\hat{a}$$

**347**
$$\xi_{i-1} = \sum_{j=i}^{P} r_{i-1,j} a_j$$
$$T_{i-1} = T_i + r_{ii}(a_i - e_i)^2$$
$$i = i - 1$$

**345**
$$i = 1$$
N

Y

**360**
$$\hat{d} = T_1 + r_{11}^2 (a_1 - e_1)^2 < d$$
N

Y

**365**
$$d = \hat{d} \qquad \hat{a} = a$$

**370**
$$i = i + 1$$

**380**
$$\delta_i = -\delta_i - 2\,\mathrm{sgn}(\delta_i)$$
$$a_i = a_i + \delta_i$$

**Fig. 3**

22

**Fig. 4A**

**Fig. 4B**

**510**

$$d = D$$
$$p = P$$
$$\sigma_p = 0, \; p = 1, \ldots P$$

**515**

ZF-DFE

**520**

$$d_p = \left\| \mathbf{R}_{.,\mathbf{m}}^{(\mathbf{p},\mathbf{p})} - \mathbf{E}^{(\mathbf{p})} \right\|^2$$
$$L(p); \; pos(p)$$

**525**

$$\sigma_p = \sigma_{p+1} + d_p$$

**530**

N    $\sigma_p < d$?    Y

**535**

Y    $p = P$?    N

**550**

$$d = \sigma_1$$
$$\hat{\mathbf{a}}_{\mathbf{opt}} = \hat{\mathbf{a}}$$

**540**

Y    $p = 1$?    N

**537**

$\hat{\mathbf{a}}_{\mathbf{opt}}$

**555**

$$p = p + 1$$
$$pos(p) = pos(p) + 1$$

**545**

$$p = p - 1$$

**560**

Y    $pos(p) > M$?    N

**565**

$$m = pos(p)$$
$$d_p = \left\| \mathbf{R}_{.,\mathbf{m}}^{(\mathbf{p},\mathbf{p})} - \mathbf{E}^{(\mathbf{p})} \right\|^2$$

**Fig. 5**

**Fig. 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **J.G. PROAKIS.** Digital communications. 242-247
- **D'E. VITERBO et al.** A universal lattice code decoder for fading channels. *IEEE Transactions on Information Theory,* Juillet 1999, vol. 45, 1639-1642
- **M.O. DAMEN et al.** On Maximum-Likelihood detection and the search for the closest lattice point. *IEEE Trans. on Information Theory,* Octobre 2003, vol. 49 (10), 2389-2402
- **C. ABOU-RJEILY et al.** MIMO UWB communications using modified Hermite pulses. *Proc. of the 17th Annual IEEE Internal Symposium on Personal, Indoor and Mobile Communications (PIRMC' 06*